# EUROPEAN PATENT APPLICATION

(11) **EP 3 293 087 A1**
(43) Date of publication of application: **14.03.2018**
(21) Application number: 17190003.8
(22) Date of filing: 07.09.2017
(51) Int. Cl.: B62D 21/20, B62D 25/20, B62D 29/00, B60K 1/04

(54) **CROSS MEMBER IN THE FLOOR WITH SPECIAL GEOMETRY FOR MOUNTING THE BATTERY PACK**

(30) Priority: 07.09.2016 US 201662384298 P; 06.09.2017 US 201715696925
(71) Applicant: Thunder Power New Energy Vehicle Development Company Limited, 1 Lyndhurst Terrace Central, Hong Kong (CN)
(72) Inventor: MAIER, Jens, Central Hong Kong (CN); VIERLING, Maik, Central Hong Kong (CN)
(74) Representative: Smith, Christopher William

(57) **Abstract**

A mounting system for an electric vehicle includes a floor structure of the electric vehicle and a rear cross beam mounted to the floor structure and extending from a right side of a passenger compartment of the electric vehicle to a left side of the passenger compartment. An underside of the rear cross beam defines a plurality of mounting features configured for mounting a battery assembly to an underside of the electric vehicle. The rear cross beam defines an interior comprising a plurality of ribs extending along a length of the rear cross beam.

## Description

### BACKGROUND OF THE INVENTION

There are many problems unique to electric vehicles, oftentimes due to the presence of large and/or numerous batteries used to power the electric motor and other components of the vehicle. These batteries are often bulky, and add significant weight to the vehicles. These considerations present challenges in designing a particularly efficient and practical electrical vehicle. Additionally, these batteries may be particularly susceptible to damage during a collision. Damage to a battery may be especially dangerous by presenting a fire and/or corrosive hazard. As such, protecting the batteries from damage remains a difficult challenge unique to the field of electric vehicles.

Vehicle manufacturers have added a number of new structural features to vehicles to improve safety and/or performance. Many of these structural features are applicable to electric, hybrid, and non-electric vehicles equally, while others place a greater emphasis on the vehicle motor type, such as a vehicle base plate with increased thickness for protecting an electric car battery over a specific region of the vehicle. Structural improvements that increase either safety or performance without a significant compromise of the other remain important objectives of vehicle manufacturers.

Electric vehicles are becoming an increasingly viable alternative to traditional vehicles with internal combustion engines. Electric vehicles may have advantages in their compactness, simplicity of design, and in being potentially more environmentally friendly depending on the means by which the electricity used in the vehicle was originally generated. The prospect of using renewable energy sources to power automobiles in place of gasoline has obvious advantages as oil reserves across the globe become increasingly depleted.

### BRIEF SUMMARY OF THE INVENTION

In one aspect, a mounting system for an electric vehicle is provided. The mounting system may include a floor structure of the electric vehicle and a rear cross beam mounted to the floor structure and extending from a right side of a passenger compartment of the electric vehicle to a left side of the passenger compartment. An underside of the rear cross beam may define a plurality of mounting features configured for mounting a battery assembly to an underside of the electric vehicle. The rear cross beam may define an interior comprising a plurality of ribs extending along a length of the rear cross beam.

In another aspect, a mounting system for an electric vehicle may include a floor structure of the electric vehicle and a rear cross beam mounted to the floor structure and extending from a right side of a passenger compartment of the electric vehicle to a left side of the passenger compartment. An underside of the rear cross beam may define a plurality of mounting features. The rear cross beam may define an outer periphery including a top wall, a bottom wall, an intermediate wall, a rear side wall, a front diagonal wall, and a rear diagonal wall. The front diagonal wall may extend rearward from a front edge of the bottom wall to a front edge of the top wall. The rear diagonal wall may extend rearward from a rear edge of the bottom wall to a front edge of the intermediate wall. The rear side wall may extend downward from a rear edge of the top wall to a rear edge of the intermediate wall. The intermediate wall may extend between a rear upper edge of the rear diagonal wall and a lower edge of the rear side wall. The outer periphery may define an interior comprising a plurality of ribs extending along a length of the rear cross beam. The mounting system may also include a battery assembly fastened to the plurality of mounting features on the underside of the rear cross beam.

In another aspect, a method of mounting seats and a battery assembly on an electric vehicle is provided. The method may include positioning a rear cross beam at a base of a passenger compartment of an electric vehicle such that the rear cross beam extends from a left side of the passenger compartment to a right side of a passenger compartment. An underside of the rear cross beam may define a plurality of mounting features. The rear cross beam may define an outer periphery including a top wall, a bottom wall, an intermediate wall, a rear side wall, a front diagonal wall, and a rear diagonal wall. The front diagonal wall may extend rearward from a front edge of the bottom wall to a front edge of the top wall. The rear diagonal wall may extend rearward from a rear edge of the bottom wall to a front edge of the intermediate wall. The rear side wall may extend downward from a rear edge of the top wall to a rear edge of the intermediate wall. The intermediate wall may extend between a rear upper edge of the rear diagonal wall and a lower edge of the rear side wall. The outer periphery may define an interior comprising a plurality of ribs extending along a length of the rear cross beam. The method may also include positioning a battery assembly against an underside of the electric vehicle and securing a plurality of fasteners with the plurality of mounting features to secure the battery assembly against the underside of the electric vehicle.

### BRIEF DESCRIPTION OF THE DRAWINGS

A further understanding of the nature and advantages of various embodiments may be realized by reference to the following figures. In the appended figures, similar components or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.
FIG. 1 depicts an electric vehicle according to embodiments.
FIG. 2 depicts a top view of a power system of an electric vehicle according to embodiments.
FIG. 3 depicts an isometric view of a tunnel of an electric vehicle according to embodiments.
FIG. 4 depicts a cross-section view the tunnel of FIG. 3 according to embodiments.
FIG. 5 depicts a mounting system for an electric vehicle according to embodiments.
FIG. 6 depicts a rear cross beam connection mechanism according to embodiments.
FIG. 7 is a flowchart depicting a method for mounting seats and a battery assembly in an electric vehicle according to embodiments.

### DETAILED DESCRIPTION OF THE INVENTION

The subject matter of embodiments of the present invention is described here with specificity to meet statutory requirements, but this description is not necessarily intended to limit the scope of the claims. The claimed subject matter may be embodied in other ways, may include different elements or steps, and may be used in conjunction with other existing or future technologies. This description should not be interpreted as implying any particular order or arrangement among or between various steps or elements except when the order of individual steps or arrangement of elements is explicitly described.

The systems and methods described herein relate generally to improvements for electric vehicles. Due to the size and weight considerations of the batteries required to power such vehicles, as well as the need to make electric vehicles as safe as possible, each component within the electric vehicles must be designed with particular characteristics in mind. Specifically, considerations related to the weight and structural integrity of each component must be weighed to ensure that the electric vehicles are both efficient and safe to operate. For example, the body of the vehicle must be stiff, efficient, and lightweight. A lightweight body helps counteract the additional weight of the batteries, which may be in the form of several large batteries, or numerous (sometimes thousands) of smaller batteries wired together. The stiff body helps make the vehicle more stable during cornering and also helps limit damage to the body and batteries during a collision. Protection of the batteries during a collision is particular important, as the large number of batteries pose a significant fire hazard and may also expose passengers and others to highly corrosive material. Due to this high safety risk, it is imperative that the body structure be designed to withstand high force collisions from any direction.

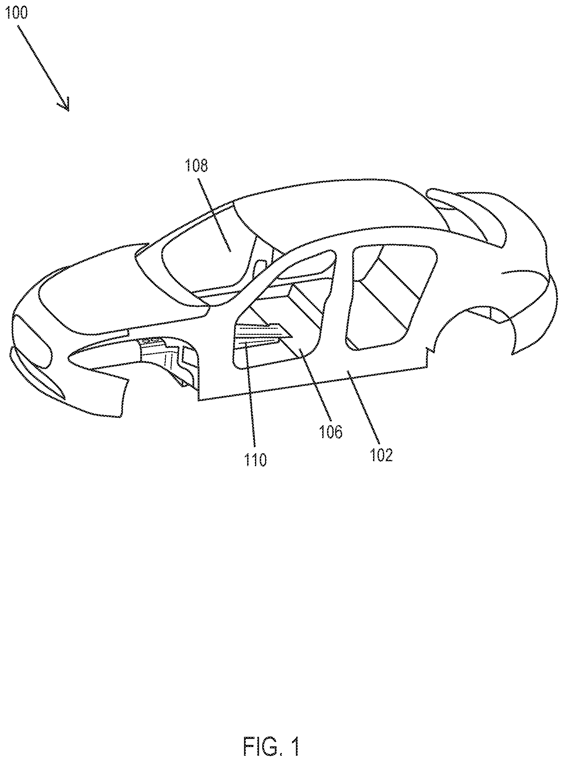

Turning now to **FIG. 1****,** one embodiment of an electric vehicle 100 is shown. While shown here as an electric automobile, electric vehicle 100 may be any motorized vehicle that is powered by electricity. For example, electric vehicle 100 may include vehicles such as cars, buses, trains, trucks, trams, watercraft, aircraft, and/or any other type of transportation mechanism.

Here, much of the main body 102 of the electric vehicle 100, especially those components designed to form the skeleton of the vehicle and those components used for collision protection, are made of aluminum or alloys containing aluminum, although it will be appreciated that other materials may be considered. Aluminum alloys provide strong, yet lightweight components that help shed weight to compensate for the high weight of the batteries necessary to power the electric vehicle. For electric vehicles, an increased emphasis is placed on protection of the batteries as damage to battery cells can cause explosion and fires within the vehicle. Such problems are compounded due to the large amount of space batteries must occupy within electric vehicles in order to maintain practical driving ranges. Therefore, vehicle alterations that provide increased protection along edges and corners of the vehicle battery are advantageous. Such alterations may include considerations related to, but not limited to providing: (1) increased rigidity of the vehicle, (2) increased absorption of energy from a collision, and (3) increased efficiency of transfer of energy/force stemming from an impact to the vehicle's body to lessen the potential impact applied to the vehicle battery and to passengers in the vehicle.

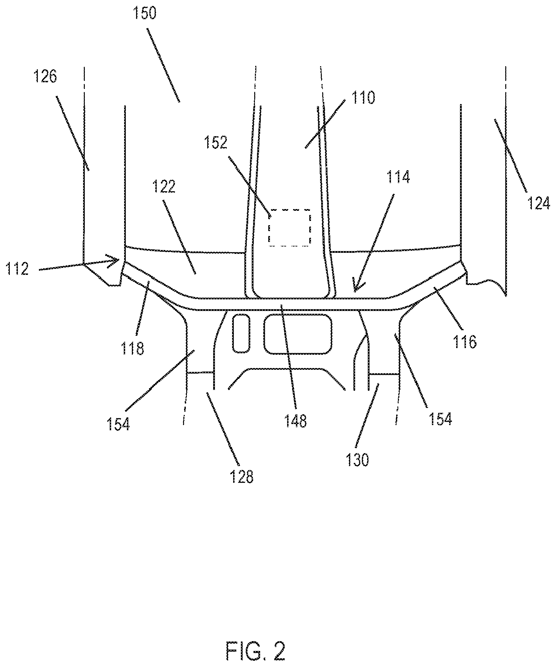

Battery elements 104 (shown in FIG. 2) are positioned underneath a floor structure 106 of the electric vehicle 100. Such positioning provides several benefits. First, the battery elements are isolated from the passenger compartment, largely by an aluminum (or other metallic material) floor structure 106, which helps increase passenger safety. The placement of the battery elements 104 underneath the vehicle 100 also allows the battery elements 104 to be connected to electrical systems of the vehicle 100 from underneath the floor structure 106. This enables the battery elements 104 to be changed out from the exterior of the vehicle 100. For example, the vehicle 100 may be raised up and the battery elements 104 may be decoupled from the underside of the vehicle 100. As just one example, a number of bolts or other fasteners may be removed and the battery elements 104 may be lowered from the vehicle 100. The battery elements 104 may be disconnected and new battery elements 104 may be connected and fastened to the underside of the vehicle 100. This allows old batteries to be replaced easily, and also enables a quick swap of depleted battery elements 104 for charged battery elements 104, serving as a method of rapidly charging the vehicle 100 for longer trips. The placement of the battery elements 104 also places much of the weight of the vehicle 100 near the ground, thus lowering the center of gravity of the vehicle 100, which allows the vehicle 100 to corner better and reduces the odds of a rollover.

Unlike automobiles that utilize internal combustion engines and include drivetrains that extend along a length of the vehicle, electric vehicle 100 is driven by one or more electric motors positioned near the wheel axles. As a result, there is no need for a longitudinal drive train. To help isolate a passenger compartment 108 from the battery elements 104 while providing access for connections of the battery elements 104 to be connected to electric systems within the passenger compartment 108 and to the one or more electric motors, the passenger compartment may be provided with a rigid tunnel 110 protruding upward from a floor structure 106 of the passenger compartment 108. However, unlike in conventional gas-powered vehicles where a tunnel may be provided to provide clearance for a drivetrain, rigid tunnel 110 is included to provide clearance for a portion of the battery elements 104 used to supply power to the electric vehicle 100. The rigid tunnel 110 may not only provide a housing for a portion of the battery assembly, but may serve a number of other functions. As just one example, the rigid tunnel 110 may help absorb and transfer force away from passengers in the event of a collision. In such embodiments, the rigid tunnel 110 may be formed of carbon fiber or another composite material that is extremely strong and lightweight. In other embodiments, the rigid tunnel 110 may serve as part of an air ventilation system, with hot or cold air being vented to the passenger compartment 108 through a portion of the rigid tunnel 110.

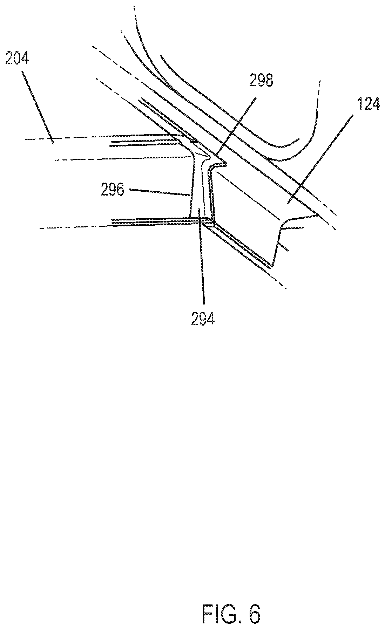

**FIG. 2** depicts one embodiment of a power system of the electric vehicle 100. The power system may include a firewall 112 positioned between a motor compartment and a passenger compartment 108 of the electric vehicle 100. The firewall 112 may be formed of several components. For example, the firewall 112 may include a front cross beam 114 having a left portion 116 and a right portion 118 separated by a medial portion 184 extending there between. The left portion 116 and the right portion 118 may each be bent rearward relative to the medial portion 184, thus defining a foot well or other front portion of the passenger compartment 108. For example, the left portion 116 and the right portion 118 may be bent backward at an angle of between about 10 and 40 degrees, more typically between about 25 and 35 degrees, relative to the medial portion 184. The front cross beam 114 may have a generally rectangular cross-section that defines an open interior. In some embodiments, the open interior may include a number of ribs that extend along a length of the front cross beam 114, as better shown in FIG. 6. The firewall 112 may also include an angled portion 122 of the floor structure 106. A horizontal flat portion 150 of floor structure 106 may be coupled with and/or extend rearward from the firewall 112. The flat portion 150 may define an aperture 152 between the firewall 112 and one or more central support beams 132 of the floor structure 106. The angled portion 122 may be coupled with a bottom end of the front cross beam 114. Such coupling is further described in relation to FIG. 6.

In some embodiments, a left longitudinal support beam 124 may be coupled with the left portion 116 and/or the angled portion 122 of the floor structure 106. A right longitudinal support beam 126 may be coupled with the right portion 118 and/or the angled portion 122 of the floor structure 106. A right front crash beam 128 may be coupled with the medial portion 184 and/or the right portion 118 and may be generally orthogonal to a right end of the medial portion 184. A left front crash beam 130 may be coupled with the medial portion 184 and/or the left portion 116 and may be generally orthogonal to a left end of the medial portion 184. In some embodiments, the crash beams 128 and 130 may be coupled directly with the front cross beam 114, while in other embodiments the crash beams 128 and 130 may be coupled with the front cross beam 114 via crash elements 154.

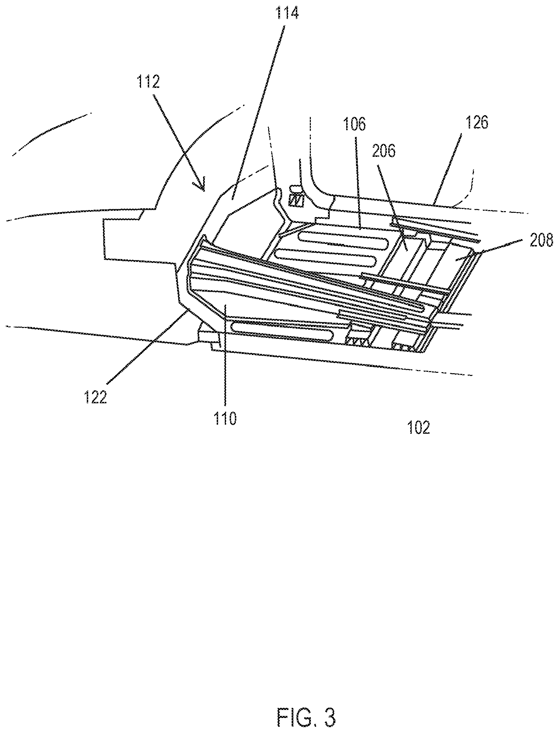

In some embodiments, the firewall 112 may be coupled with the rigid tunnel 110, which may extend rearward from the firewall 112 to one or more central cross beams 132 as shown in **FIG. 3****.** For example, a front edge of the rigid tunnel 110 may be coupled with a medial portion of the angled portion 122 and a medial portion of the front cross beam 114. The front edge of the rigid tunnel 110 may be open, such that access to the motor compartment may be provided underneath the rigid tunnel 110. A rear portion of the rigid tunnel 110 may be coupled with the central cross beams 132. For example, a forward most of the central cross beams 132 may be coupled with an underside of the rigid tunnel 110, such as within a notch in the rigid tunnel 110 that is configured to receive the forward most central cross beam 132. The rearmost central cross beam 132 may be configured to couple with and/or near a rear edge of the rigid tunnel 110. The central cross beams 132 may extend laterally across a width of the passenger compartment 108. In some embodiments, a top surface of one or more of the central cross beams 132 may be configured to be used as mounting points for the front seats. For example, the top surface of one of more of the central cross beams 132 may define apertures that are configured to receive bolts and/or other fastening mechanisms for coupling seat rails 164 and/or other seat mounts to the central cross member(s) 132. In some embodiments, seat brackets may be mounted to one or more of the central cross beams 132. These brackets may then receive seat rails 164 with which seats may be mounted. Oftentimes, each seat will be mounted to two seat rails 164, although it will be appreciated that other numbers of rails 164 may be used.

In some embodiments, the central cross beams 132 (as well as other support members secured to the floor structure 106, as well as the floor structure 106 itself) may be configured to have the battery assembly 104 mounted thereon. For example, a lower surface of one or more of the central cross beams 132 may be configured to receive one or more removable fastening mechanisms, such as bolts, that are used to secure the battery assembly 104 to an underside of the floor structure 106. As just one example, the central cross beams 132 may be positioned atop the floor structure 106, with the battery element 104 positioned against an underside of the floor structure 106 (possibly with one or more intervening layers and/or components between the battery element 104 and the floor structure. One or more bolts may extend from an underside of the battery element 104, through the floor structure 106, and into an interior of one or more of the central cross beams 132. The bolts or other fasteners may be positioned through apertures in the battery element 104 and/or a flange of the battery element 104. The central cross beams 132 provide strong mounting locations for the battery element 104, allowing the battery element 104 to be larger and provide the vehicle 100 with a longer range.

The central cross beams 132 may also serve to strengthen the sides of the passenger compartment 108 and to protect the passenger compartment 108 in the event of an impact. The front cross beam 114 (and rest of firewall 112) may be configured to transfer force from a frontal collision from the front crash beams 128 and 130 to the one or more central cross beams 132 via the rigid tunnel 110. Additionally or alternatively, the front cross beam 114 (and rest of firewall 112) may also be configured to transfer force from a frontal collision from the front crash beams 128 and 130 to the left longitudinal support beam 124 and the right longitudinal support beam 126.

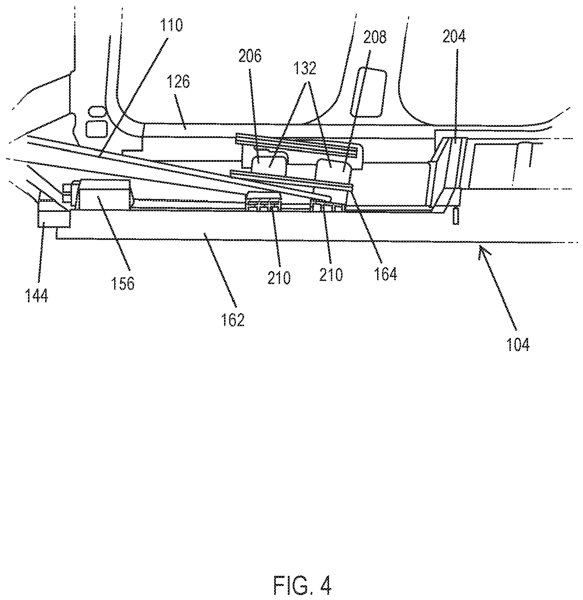

Battery assembly 104 may be configured to mount with an underside of the floor structure 106. The battery assembly 104 may include at least one battery 162, but often includes a large number of batteries ranging from dozens to thousands, depending on the size of each of the batteries. In some embodiments, the battery 162 includes a number of battery units arranged in two tiers as best seen in **FIG. 4****.** For example, a first tier may extend underneath all or part of the passenger compartment 108, while a second tier may be stacked upon a portion of the first tier such that it extends upward at a position rearward of the passenger compartment 108. In some embodiments, the upper tier of the battery assembly 104 may be positioned rearward of a rear cross beam 204. Rear cross beam 204 may extend across a width of the passenger compartment 108. The rear cross beam 204 may be configured to receive one or more fasteners configured to secure the battery assembly 104 to the underside of the vehicle 100. In some embodiments, the rear cross beam 204 may also be used to mount one or more rear seats within the passenger compartment 108.

The battery assembly 104 may also include a battery connector housing 156. The battery connector housing 156 may be configured to house at least one battery connector therein. The battery connector housing 156 may define at least one electric connector configured to couple with at least one electric system of the electric vehicle 100, such as the electric motor. The battery connector housing 156 may be configured to be inserted within the aperture 152 of the floor structure 106 such that at least a portion of the battery connector housing 156 extends above a top surface of the floor structure 106. This allows the electric connectors to be accessible through a front opening of the rigid tunnel 110, enabling the battery element 104 to be electrically coupled to both the motor and the other electrical systems of the vehicle 100. Battery assembly 104 may be secured to the underside of the floor structure 106 using fasteners accessible from the underside of the floor structure 106 such that the battery assembly 104 is removable from the electric vehicle 100 without accessing the passenger compartment 108. These fasteners may be spaced apart along the underside of the vehicle 100 at the floor structure 106, central cross beams 132, a subfloor cross beam 160, and/or other structural elements, with a spacing and number of fasteners being determined by a weight, size, and/or shape of the battery element 104.

Rigid tunnel 110 may be coupled with the firewall 112, such as at a rear surface of the firewall 112. The rigid tunnel 110 may also be coupled with the floor structure 106 and the central support beams 132. The rigid tunnel 110 may be configured to cover the portion of the battery connector housing 156 that extends above the floor structure 106 such that the passenger compartment 108 is sealed from the battery connector housing 156.

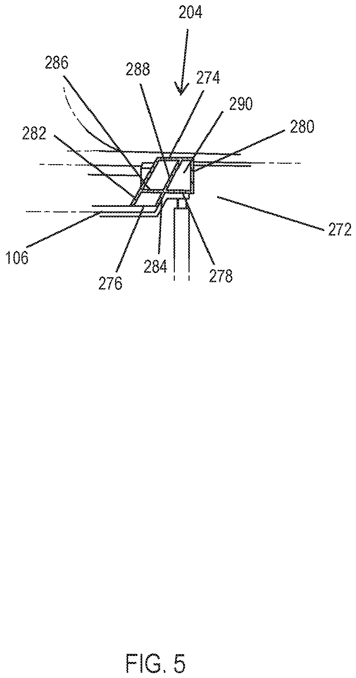

**FIG. 5** depicts a mounting system of the electric vehicle 100. The mounting system includes the floor structure 106 of the electric vehicle 100. The floor structure 106 may extend through all or a large portion of the passenger compartment 108 and serve as a floor as well as a base support structure for mounting various components, such as a center console (not shown), the rigid tunnel 110, and seats within the passenger compartment 108. The mounting system may also include rear cross beam 204 mounted to the floor structure 106 and extending from a right side of the passenger compartment 108 to a left side of the passenger compartment 108. In some embodiments, the rear cross beam 204 may define a rear of the passenger compartment 108, with a front portion of the rear cross beam 204 being coupled to a rear end of the floor structure 106 while a back portion of the rear cross beam 204 is coupled with a chassis and/or other base structure 272 of the electric vehicle 100. Oftentimes, the floor structure 106 and the base structure 272 have different heights at a rear of the passenger compartment 108. The rear cross beam 204 may then effectively couple a top of the floor structure 106 to a proximately located top of the base structure 272. A bottom surface of the rear cross beam 204 may correspond to a shape of the junction between the floor structure 106 and the base structure 272.

For example, the rear cross beam 204 may have an outer periphery that includes a top wall 274, a bottom wall 276, an intermediate wall 278, a rear side wall 280, a front diagonal wall 282, and a rear diagonal wall 284. The front diagonal wall 282 may extend rearward from a front edge of the bottom wall 276 to a front edge of the top wall 274. The rear diagonal wall 284 may extend rearward from a rear edge of the bottom wall 276 to a front edge of the intermediate wall 278. The rear side wall 280 may extend downward from a rear edge of the top wall 274 to a rear edge of the intermediate wall 278. The intermediate wall 278 may extend between a rear upper edge of the rear diagonal wall 284 and a lower edge of the rear side wall 280. Thus, the outer periphery of the rear cross beam 204 may slant upward toward the rear of the vehicle 100, with a portion protruding rearward, forming a generally P-shaped or irregular hexagonal structure. The bottom wall 276 may be fastened or otherwise coupled with the top surface of the floor structure 106, while the rear diagonal wall 284 extends along a protruding front face of a raised base structure 272. The intermediate wall 278 may be positioned against an intermediate flat surface of the base structure 272, while the rear side wall 280 may be positioned against a vertical face of the base structure 272. One or more of the rear diagonal wall 284, the intermediate wall 278, and the rear side wall 280 may be fastened and/or otherwise coupled with the base structure 272.

In some embodiments, the outer periphery of the rear cross beam 204 defines an interior having a number of ribs extending along a length of the rear cross beam 204. For example, a first rib 286 may extend horizontally from and being generally planar with the intermediate wall. The first rib 286 may extend into a medial portion of the front diagonal wall 282. A second rib 288 may extend diagonally from and be generally planar with the rear diagonal wall 284. The second rib 288 may extend into a medial portion of the top wall 274. The use of ribs 286 and 288 helps stiffen and strengthen the rear cross beam 204 without adding a substantial amount of material or weight, thereby allowing the rear cross beam 204 to handle larger impact forces in the event of a collision. To facilitate the formation of the ribs, the rear cross beam 204 may be extruded from aluminum such that the ribs are formed along with the outer walls of the rear cross beam 204. In some embodiments, connection points between the ribs and the outer walls of the rear cross beam 204 may taper outward such that a thickness near the connection point is greater than a thickness of the rest of the ribs. Similarly, any junctions of the ribs with one another may also have greater thicknesses than the rest of the ribs.

An underside of the rear cross beam 204 define a plurality of mounting features (not shown) configured to enable the battery assembly 104 to be secured to an underside of the vehicle 100. For example, the mounting features may be apertures, threaded holes, and/or other receptacles configured to receive fasteners inserted from an underside of the vehicle 100. Oftentimes, the mounting features may be positioned such that they extend through the intermediate wall 278 and through a portion of the base structure 272. This allows the battery assembly 104 to be fastened to the mounting features on the underside the rear cross beam 204. For example, fasteners for securing the battery assembly 104 to the mounting features may be received within a space 290 between the intermediate wall 278, the rear side wall 280, the top wall 274, and the second rib 288. These mounting features may be spaced apart across the length of the rear cross beam 204. It will be appreciated that mounting features may be formed in other portions of the electric vehicle 100, such as through other support beams, so as to provide better support for the battery assembly 104.

In some embodiments, the rear cross beam 204 may serve as one of the mounting points for the rear seat of the passenger compartment 108. For example, a top surface, such as top wall 274, of the rear cross beam 204 may define a number of mounting features that may be used to bolt on or otherwise coupled a seat to the rear cross beam 204. In some embodiments, a front section of the seat may be bolted to the rear cross beam 204, while a rear portion of the seat is mounted to a more rearward structure of the vehicle 100.

Oftentimes, rear cross beam 204 is formed from aluminum or an aluminum alloy. The use of aluminum, rather than a more rigid material such as steel, not only reduces the weight of the vehicle 100, but also allows more of the energy from a collision to be absorbed. The formation of ribs within the rear cross beam 204 aids in handling larger forces. To facilitate the formation of any ribs, the rear cross beam 204 may be extruded from aluminum such that the ribs are formed along with the outer walls of the rear cross beam 204. In some embodiments, connection points between the ribs and the outer walls of the rear cross beam 204 may taper outward such that a thickness near the connection point is greater than a thickness of the rest of the ribs. Similarly, junctions of the ribs with one another may also have greater thicknesses than the rest of the ribs.

**FIG. 6** depicts a beam connection system of the electric vehicle 100. The system may include at least one longitudinal beam 124 or 126 coupled with a chassis 292 of the electric vehicle 100. For example, a left longitudinal beam 124 may extend along a left side of the electric vehicle 100. A right longitudinal beam 126 may extend along a right side of the vehicle 100. In some embodiments, the longitudinal beams 124 and/or 126 define a sill of the passenger compartment 108. The longitudinal beams 124 and/or 126 may be configured to absorb and transfer force in a manner to protect the battery elements 104 and the passenger compartment 108. For example, the right and left longitudinal beams 124 and/or 126 may each be formed of aluminum or aluminum alloys.

The use of aluminum, rather than a more rigid material such as steel, not only reduces the weight of the vehicle 100, but also allows more of the energy from a collision to be absorbed, such as by designing the aluminum longitudinal beams 124 and/or 126 to crumple in an accordion-like manner. Such crumpling may be achieved by outer walls of the right and left longitudinal crash beams 124 and/or 126 being chamfered and/or formed to include one or more indentations designed to encourage the controlled crumpling in the event of an impact.

To aid in handling larger forces, each of the left longitudinal beam and the right longitudinal beam 124 and/or 126 defines an interior comprising a plurality of ribs extending along a length of the right and left longitudinal beams 124 and/or 126. The ribs may extend through the entire interior to couple multiple walls together, thus providing additional material and material thickness to absorb and transfer greater forces. For example, the right and left longitudinal beams 124 and/or 126 may each include one or more vertical ribs extending from a top wall to a bottom wall and/or one or more horizontal rib extending from one side wall to another side wall of the longitudinal beams 124 and/or 126. In other embodiments, ribs may be diagonally oriented. To facilitate the formation of the ribs, the left and the right longitudinal beam 124 and/or 126 may be extruded from aluminum such that the ribs are formed along with the outer walls of the longitudinal beams 124 and/or 126. In some embodiments, connection points between the ribs and the outer walls of the longitudinal beams 124 and/or 126 may taper outward such that a thickness near the connection point is greater than a thickness of the rest of the ribs. Similarly, any junctions of the ribs with one another may also have greater thicknesses than the rest of the ribs.

The connection system may also include rear cross beam 204 that extends from a right side of the passenger compartment 108 to a left side of the passenger compartment 108. In some embodiments, an underside of the rear cross beam 204 defines a number of mounting features configured for mounting the battery elements 104 to an underside of the electric vehicle 100. For example, a number of fasteners may be inserted into the mounting features to bolt on or otherwise fasten the battery elements 104 to the electric vehicle 100. The rear cross beam 204 may be oriented generally orthogonal to the longitudinal support beams 124 and/or 126 and configured to extend between the longitudinal support beams 124 and/or 126. To aid in handling larger forces, the rear cross beam 204 may define an interior having one or more ribs extending along its length. The ribs may extend through the entire interior to couple multiple walls together, thus providing additional material and material thickness to absorb and transfer greater forces. To facilitate the formation of the ribs, the rear cross beam 204 may be extruded from aluminum such that the ribs are formed along with the outer walls of the cross beams.

The connection system may also include a connector 294 disposed between each of the longitudinal support beams 124 and/or 126 and the rear cross beam 204. The connector 294 may be configured to couple the longitudinal support beams 124 and/or 126 and the rear cross beam 204 with one another. The connector 294 may include a first portion 296 that is configured to receive an end of the rear cross beam 204. For example, the first portion 296 may define a generally rectangular (or other shape corresponding to a cross-sectional shape of the rear cross beam 204) chamber in which the end of the rear cross beam 204 may be inserted and secured. In some embodiments, the first portion 296 may define a flange configured to extend around an entire (or a substantial amount) outer periphery of the end of the rear cross beam 204. The flange may have a length of at least about 1-3 cm, although larger flanges may be used. Such a length ensures that a sufficient amount of the rear cross beam 204 is secured within the first portion 296, while providing sufficient surface area through which one or more securement mechanisms, such as fasteners, weld beads, and the like, may be applied.

The connector 294 may also include a second portion 298 configured to receive a medial portion of the longitudinal support beam 124 and/or 126. In some embodiments, the second portion 298 may form a u-shaped receptacle that may be positioned around a portion of one of the longitudinal support beams 124 and/or 126. For example, the second portion 298 may define a flange configured to extend around an entirety of a side wall 300 of one of the longitudinal support beams 124 and/or 126 while wrapping around at least a portion of one or both of a top surface 302 or a bottom surface 304 of the longitudinal support beam 124 and/or 126. To properly secure this flange to the longitudinal support beam 124 and/or 126, the flange may be designed to have a width that is greater than a width of the first portion 296. For example, the flanges of the connector 294 may form a generally T-shaped profile when viewed from above, with the first portion 296 forming a base of the T and the second portion 298 forming a cross of the T. In other words, the flange of the first portion 296 and the flange of the second portion 298 may be positioned such that they generally orthogonal relative to one another. The flange of the second portion 298 may be configured to extend a width of at least 1-3 cm beyond an outer periphery of the first portion 296. This width ensures that a sufficient amount of the longitudinal support beam 124 and/or 126 is secured within the second portion 298, while providing sufficient surface area through which one or more securement mechanisms, such as fasteners, weld beads, and the like, may be applied.

The connector 294 is configured to couple two orthogonally oriented components, with the first portion 296 being configured to receive an end of one component in a first direction while the second portion 298 is configured to receive a side of a second component from a second direction opposite the first. A base of the u-shaped receptacle of the second portion 298 and a base of the generally rectangular chamber of the first portion 296 may be the same base and/or aligned in a generally parallel layout. In some embodiments, the rear cross beam 204 and the longitudinal support beams 124 and/or 126 may have different heights and/or top and/or bottom surfaces of the rear cross beam 204 and the longitudinal support beams 124 and/or 126 may not be aligned with one another. In such embodiments, the connector 294 may be configured to accommodate the differences in sizes and/or alignments. For example, the rear cross beam 204 may have a height greater than that of the longitudinal support beams 124 and/or 126. In some embodiments, the connector 294 may accommodate the difference in height by having the flange of the first portion 296 slope downward to a lower height where it contacts and/or flows into the flange of the second portion 298. Similar design alterations may be considered to accommodate height and/or alignment issues with other dimensions of the beams. In embodiments where some or all of the heights are aligned, the flange from the first portion 296 and the flange from the second portion 298 may be a single flat surface that is configured to receive and secure the desired beams. Due to the complex design of the connector 294, it may be cast or pressed out of aluminum.

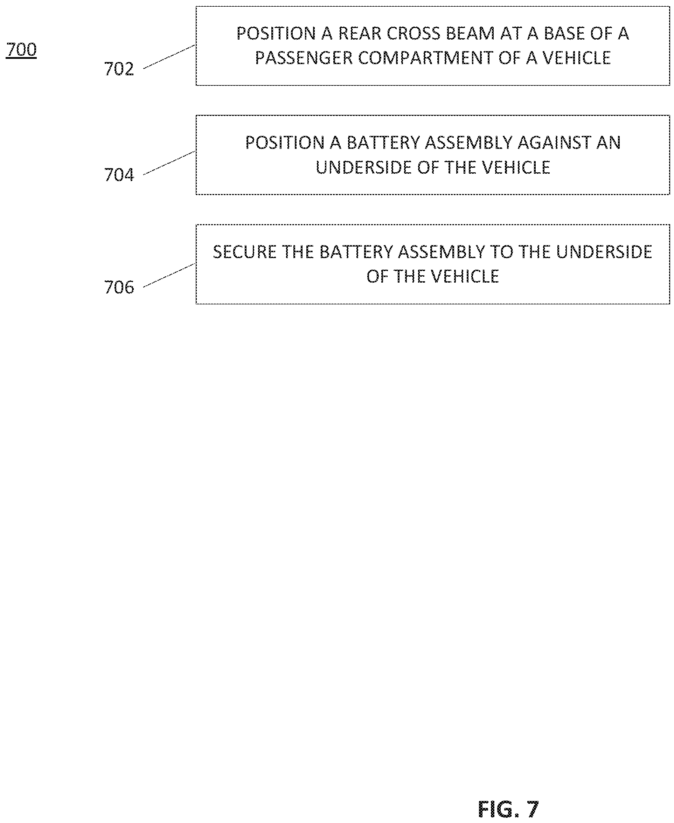

**FIG. 7** is a flowchart depicting a process 700 for mounting seats and a battery assembly on an electric vehicle. Process 700 may be performed using the electric vehicle 100 described herein. Process 700 may begin at block 702 by positioning a rear cross beam at a base of a passenger compartment of an electric vehicle such that the rear cross beam extends from a left side of the passenger compartment to a right side of a passenger compartment. An underside of the rear cross beam may define a number of mounting features that may each be configured to receive a fastener for securing a battery assembly to the underside of the electric vehicle.

The rear cross beam may define an outer periphery having a top wall, a bottom wall, an intermediate wall, a rear side wall, a front diagonal wall, and a rear diagonal wall. The front diagonal wall may extend rearward from a front edge of the bottom wall to a front edge of the top wall. The rear diagonal wall may extend rearward from a rear edge of the bottom wall to a front edge of the intermediate wall. The rear side wall may extend downward from a rear edge of the top wall to a rear edge of the intermediate wall. The intermediate wall may extend between a rear upper edge of the rear diagonal wall and a lower edge of the rear side wall. The outer periphery may define an interior that includes a number of ribs extending along a length of the rear cross beam. For example, a first rib may extend from and be generally planar with the intermediate wall. The first rib may extend from the intermediate wall and into a medial portion of the front diagonal wall. A second rib may extend from and be generally planar with the rear diagonal wall. The second rib may extend into a medial portion of the top wall.

At block 704, a battery assembly may be positioned against an underside of the electric vehicle. The battery assembly may then be mounted against the underside of the vehicle by securing a number of fasteners within the plurality of mounting features at block 706. In some embodiments, this may involve tightening the fasteners such that a portion of each fastener extends into a space between the intermediate wall, the rear wall, the top wall, and the second rib. These fasteners may be inserted within the mounting features from and underside of the electric vehicle, with a portion of the fasteners extending through the battery assembly. The mounting features may be spaced apart across the length of the rear cross beam to support the battery assembly across a width of the battery assembly and the rear cross beam. In some embodiments, process 700 may also include mounting at least one rear seat on the rear cross beam. For example, a top surface of the rear cross beam may define a number of seat mounting points, which may be used to fasten and/or otherwise secure a rear seat within the passenger compartment.

It should be noted that the systems and devices discussed above are intended merely to be examples. It must be stressed that various embodiments may omit, substitute, or add various procedures or components as appropriate. Also, features described with respect to certain embodiments may be combined in various other embodiments. Different aspects and elements of the embodiments may be combined in a similar manner. Also, it should be emphasized that technology evolves and, thus, many of the elements are examples and should not be interpreted to limit the scope of the invention.

Specific details are given in the description to provide a thorough understanding of the embodiments. However, it will be understood by one of ordinary skill in the art that the embodiments may be practiced without these specific details. For example, well-known structures and techniques have been shown without unnecessary detail in order to avoid obscuring the embodiments. This description provides example embodiments only, and is not intended to limit the scope, applicability, or configuration of the invention. Rather, the preceding description of the embodiments will provide those skilled in the art with an enabling description for implementing embodiments of the invention. Various changes may be made in the function and arrangement of elements without departing from the spirit and scope of the invention.

Having described several embodiments, it will be recognized by those of skill in the art that various modifications, alternative constructions, and equivalents may be used without departing from the spirit of the invention. For example, the above elements may merely be a component of a larger system, wherein other rules may take precedence over or otherwise modify the application of the invention. Also, a number of steps may be undertaken before, during, or after the above elements are considered. Accordingly, the above description should not be taken as limiting the scope of the invention.

Also, the words "comprise", "comprising", "contains", "containing", "include", "including", and "includes", when used in this specification and in the following claims, are intended to specify the presence of stated features, integers, components, or steps, but they do not preclude the presence or addition of one or more other features, integers, components, steps, acts, or groups.

## Claims

1. A mounting system for an electric vehicle, the mounting system comprising:
a floor structure of the electric vehicle; and
a rear cross beam mounted to the floor structure and extending from a right side of a passenger compartment of the electric vehicle to a left side of the passenger compartment, wherein:
an underside of the rear cross beam defines a plurality of mounting features configured for mounting a battery assembly to an underside of the electric vehicle; and
the rear cross beam defines an interior comprising a plurality of ribs extending along a length of the rear cross beam.

2. The mounting system for an electric vehicle of claim 1, wherein:
the rear cross beam comprises extruded aluminum.

3. The mounting system for an electric vehicle of claim 1 or claim 2, wherein:
the plurality of mounting features are spaced apart across the length of the rear cross beam.

4. The mounting system for an electric vehicle of any of claims 1 to 3, wherein:
the rear cross beam is generally hexagonal in shape.

5. The mounting system for an electric vehicle of any preceding claim, wherein:
the plurality of mounting features are each configured to receive a fastener for securing the battery assembly to the underside of the electric vehicle.

6. The mounting system for an electric vehicle of any preceding claim, wherein:
the rear cross beam comprises:
a top wall, a bottom wall, an intermediate wall, a rear side wall, a front diagonal wall, and a rear diagonal wall, wherein:
i) the front diagonal wall extends rearward from a front edge of the bottom wall to a front edge of the top wall;
ii) the rear diagonal wall extends rearward from a rear edge of the bottom wall to a front edge of the intermediate wall;
iii) the rear side wall extends downward from a rear edge of the top wall to a rear edge of the intermediate wall; and
iv) the intermediate wall extends between a rear upper edge of the rear diagonal wall and a lower edge of the rear side wall.

7. The mounting system for an electric vehicle of claim 6, wherein:
the plurality of ribs comprises:
a first rib extending from and generally planar with the intermediate wall, the first rib extending into a medial portion of the front diagonal wall; and
a second rib extending from and generally planar with the rear diagonal wall, the second rib extending into a medial portion of the top wall.

8. A mounting system for an electric vehicle, the mounting system comprising:
a floor structure of the electric vehicle; and
a rear cross beam mounted to the floor structure and extending from a right side of a passenger compartment of the electric vehicle to a left side of the passenger compartment, wherein:
i) an underside of the rear cross beam defines a plurality of mounting features;
ii) the rear cross beam defines an outer periphery comprising a top wall, a bottom wall, an intermediate wall, a rear side wall, a front diagonal wall, and a rear diagonal wall;
iii) the front diagonal wall extends rearward from a front edge of the bottom wall to a front edge of the top wall;
iv) the rear diagonal wall extends rearward from a rear edge of the bottom wall to a front edge of the intermediate wall;
v) the rear side wall extends downward from a rear edge of the top wall to a rear edge of the intermediate wall;
vi) the intermediate wall extends between a rear upper edge of the rear diagonal wall and a lower edge of the rear side wall; and
vii) the outer periphery defines an interior comprising a plurality of ribs extending along a length of the rear cross beam; and
a battery assembly fastened to the plurality of mounting features on the underside of the rear cross beam.

9. The mounting system for an electric vehicle of claim 8, wherein:
the plurality of ribs comprises:
a first rib extending from and generally planar with the intermediate wall, the first rib extending into a medial portion of the front diagonal wall; and
a second rib extending from and generally planar with the rear diagonal wall, the second rib extending into a medial portion of the top wall.

10. The mounting system for an electric vehicle of claim 9, wherein:
fasteners for securing the battery assembly to the plurality of mounting features are received within a space between the intermediate wall, the rear wall, the top wall, and the second rib.

11. The mounting system for an electric vehicle of any of claims 8 to 10, wherein:
the rear cross beam comprises extruded aluminum; and/or
the plurality of mounting features are disposed in the intermediate wall; and/or.
a bottom surface of the rear cross beam corresponds to a shape of the floor structure.

12. The mounting system for an electric vehicle of any of claims 8 to 11, further comprising:
at least one seat mounted on the rear cross beam.

13. A method of mounting seats and a battery assembly on an electric vehicle, the method comprising:
positioning a rear cross beam at a base of a passenger compartment of an electric vehicle such that the rear cross beam extends from a left side of the passenger compartment to a right side of a passenger compartment, wherein:
i) an underside of the rear cross beam defines a plurality of mounting features;
ii) the rear cross beam defines an outer periphery comprising a top wall, a bottom wall, an intermediate wall, a rear side wall, a front diagonal wall, and a rear diagonal wall;
iii) the front diagonal wall extends rearward from a front edge of the bottom wall to a front edge of the top wall;
iv) the rear diagonal wall extends rearward from a rear edge of the bottom wall to a front edge of the intermediate wall;
v) the rear side wall extends downward from a rear edge of the top wall to a rear edge of the intermediate wall;
vi) the intermediate wall extends between a rear upper edge of the rear diagonal wall and a lower edge of the rear side wall; and
vii) the outer periphery defines an interior comprising a plurality of ribs extending along a length of the rear cross beam;
positioning a battery assembly against an underside of the electric vehicle; and
securing a plurality of fasteners with the plurality of mounting features to secure the battery assembly against the underside of the electric vehicle.

14. The method of mounting seats and a battery assembly on an electric vehicle of claim 13, wherein:
the plurality of ribs comprises:
a first rib extending from and generally planar with the intermediate wall, the first rib extending into a medial portion of the front diagonal wall; and
a second rib extending from and generally planar with the rear diagonal wall, the second rib extending into a medial portion of the top wall,
wherein securing the plurality of fasteners preferably comprises tightening the fasteners such that a portion of each fastener extends into a space between the intermediate wall, the rear wall, the top wall, and the second rib.

15. The method of mounting seats and a battery assembly on an electric vehicle of claim 13 or claim 14, wherein:
the plurality of fasteners are inserted from the underside of the electric vehicle; and/or
the plurality of mounting features are spaced apart across the length of the rear cross beam; and/or
the rear cross beam comprises extruded aluminum.
